# EUROPEAN PATENT SPECIFICATION

(11) **EP 3 331 264 B1**
(45) Date of publication and mention of the grant of the patent: **09.09.2020**
(21) Application number: 16201953.3
(22) Date of filing: 02.12.2016
(51) Int. Cl.: H04L 12/28, H04W 80/04, H04L 29/12

(54) **PACKET FORWARDING TO SUBNETS HOSTED BY LTE CELLULAR EQUIPMENTS**
PAKETWEITERLEITUNG AN VON ZELLULAREN LTE-AUSRÜSTUNGEN GEHOSTETE SUBNETZE
TRANSMISSION EN PAQUETS À DES SOUS-RÉSEAUX HÉBERGÉS PAR DES ÉQUIPEMENTS CELLULAIRES LTE

(43) Date of publication of application: 06.06.2018
(73) Proprietor: Alcatel Lucent, 91620 Nozay (FR)
(72) Inventor: MONGAZON-CAZAVET, Bruno, 91620 NOZAY (FR); FORNIER, François, 91620 NOZAY (FR); RAYNAL, Claire, 91620 NOZAY (FR)
(74) Representative: Camus, Olivier Jean-Claude

(56) References cited:
- US-A1- 2014 148 129
- US-A1- 2016 182 683
- US-B1- 8 391 218

## Description

### BACKGROUND

### Technical Field

The present invention relates to a method of forwarding packets to at least one subnet hosted by a LTE cellular equipment. It finds applications, in particular, in LTE networks wherein downlink packets originating from the core of the network are routed to subnets behind cellular equipments used as routers.

### Related Art

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

LTE networks have an architecture composed of two parts: the core network and the access network.

The core network, called the Evolved Packet Core (ePC) in the System Architecture Evolution (SAE), comprises three main logical nodes:
- the Packet Gateways (PGW) which give access to the Internet and are responsible for IP address allocation;
- the Serving Gateways (SGW) which manage the data traffic through the core network; and,
- the Mobility Management Entity (MME) which handle the signalling between entities of the radio access network and the core network.

The access network, called Evolved Universal Terrestrial Radio Access Network (EUTRAN), comprises a network of evolved Nodes B (eNodeB), which are the base stations forming the radio interface between the core network and the User Equipment's (UE's).

The UE's are the mobile devices used by end-users which can be, for instance, cell phones, smartphones, laptops with a mobile adapter, or personal computers (PCs) with a wireless modem. In any case, in the context of the invention, UE's are wireless end-user equipment's with a radio cellular means of connection up to the core network.

The PGW operates as the Internet Protocol (IP) endpoint of any cellular equipment having a cellular connection up to the core network. As such, it is in charge of delivering downlink packets from the Internet to the cellular equipment and, reciprocally, of transmitting uplink packets from the cellular equipment to the Internet.

In some applications, however, a cellular equipment is not an end-user but rather a router that serves other pieces of equipment connected through a distinct network interface. In other words, this cellular equipment hosts a subnet, namely an IP subnet, formed by the hosting cellular equipment and the connected pieces of equipment. This IP subnet is managed solely by the hosting cellular equipment.

In such applications, the subnets need to be addressable by the PGW so that a packet received by the PGW and intended for any specific subnet hosted by a cellular equipment can be forwarded by the PGW to this cellular equipment.

However, the forwarding mechanism is neither defined nor allowed by the Core Network Protocols defined by the 3^{rd} Generation Partnership Project (3GPP) standards. Indeed, the PGW can only forward packets on the basis of a destination IP address. Besides, the PGW only allocates IP addresses to cellular equipment's. It implies that when a downlink packet having a destination IP address corresponding to a subnet is received by the PGW, it is dropped by said PGW.

Finally, even though uplink packets are natively forwarded from subnets to cellular equipment's and from cellular equipment's to the PGW and the Internet, a problem remains for downlink packets that cannot be routed to the end-user equipment of destination.

A possible solution to the afore mentioned problem would consist in building a specific tunnel between the PGW and the cellular equipment hosting the subnet. Such tunnel could be created, in possible implementations, by using IP-in-IP encapsulation (also called IP tunnelling) wherein an IP packet is encapsulated in another IP packet. The original packet (i.e., the inner packet) would keep unmodified but encapsulated in the other packet, meaning that an outer IP header would be used to open a tunnel to the desired destination.

However, such encapsulation is not available on all computing platforms (for instance it is not available on Windows systems) and, more importantly, tunnelling generates significant overhead in the data plane (typically more than 20 bytes) and requires cumbersome operations for its configuration. In addition, tunnel encapsulation might also imply packet losses.

The document US 2014/148,129 A1 entitled "WiFi FIXED WIRELESS PERSONAL SERVICES" is known from the prior art.

### SUMMARY

To address these problems, the present invention proposes a method of forwarding packets to at least one subnet hosted by a LTE cellular equipment. The forwarding of packets intended for subnets respectively hosted by cellular equipment's is accomplished by defining relationships at the PGW level between subnets and respective IP addresses of the cellular equipment's, and by using a bearer to transport data from the PGW to a hosting cellular equipment associated to the destination IP address.

The present invention is defined in the appended independent claims to which reference should be made. Advantageous features are set out in the appended dependent claims.

### BRIEF DESCRIPTION OF THE DRAWINGS

Embodiments of the present invention are illustrated by way of example, and not by way of limitation, in the figures of the accompanying drawings, in which like reference numerals refer to similar elements and in which:
- Figure 1 is a simplified schematic description of a typical LTE network architecture;
- Figure 2 is a simplified schematic description of a LTE network architecture focused on network entities involved by the method of the invention;
- Figure 3 is a functional diagram showing an embodiment of the method of the invention.

### DESCRIPTION OF PREFERRED EMBODIMENTS

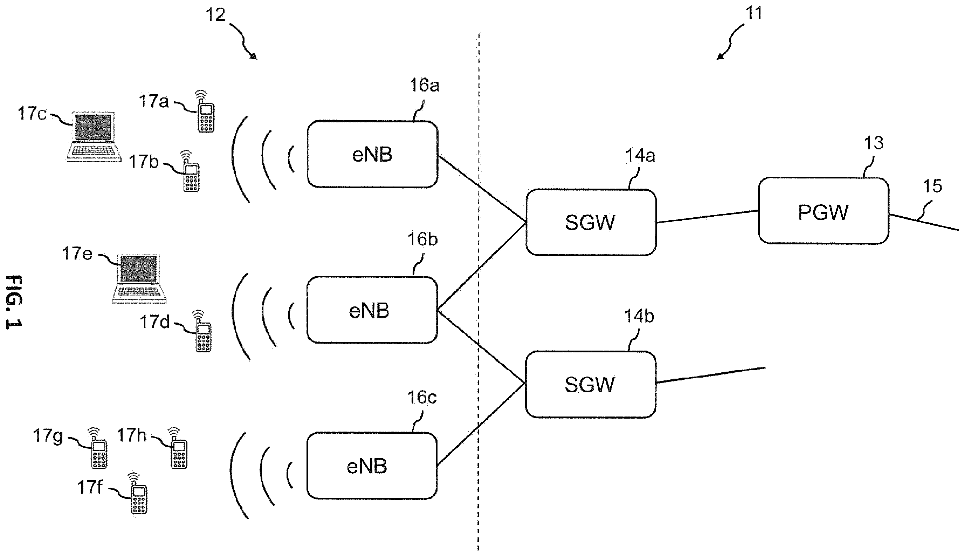

Referring first to Figure 1, there is shown therein a simplified schematic diagram of a typical LTE network architecture. The LTE network comprises two parts: the core network 11 which is for instance an Evolved Packet Core (ePC), and the access network 12 which is for instance an Evolved Universal Terrestrial Radio Access Network (EUTRAN).

The core network can comprise at least one Packet Gateway (PGW) 13 and one or more Serving Gateways (SGW) such as gateways 14a and 14b as shown. The PGW is the gateway access to the switched packet network (i.e. to the Internet in one example) as it is partially illustrated by the link 15 as shown in Figure 1.

A plurality of Evolved Nodes B (eNB) 16a, 16b and 16c belong to the access network 12 and interface with the core network 11. In one example, all eNB's are base stations of the access network 12 having cellular connections with the end-user equipment's also known as User Equipment's (UE's). In Figure 1, such UE's 17a to 17h are connected to either one of the eNB's 16a, 16b and 16c through respective LTE cellular connections, which are radio interfaces. Hence, the UEs are cellular equipment's such as, for instance, PCs with LTE modem, mobile phones, smartphones, or laptops with a mobile adapter.

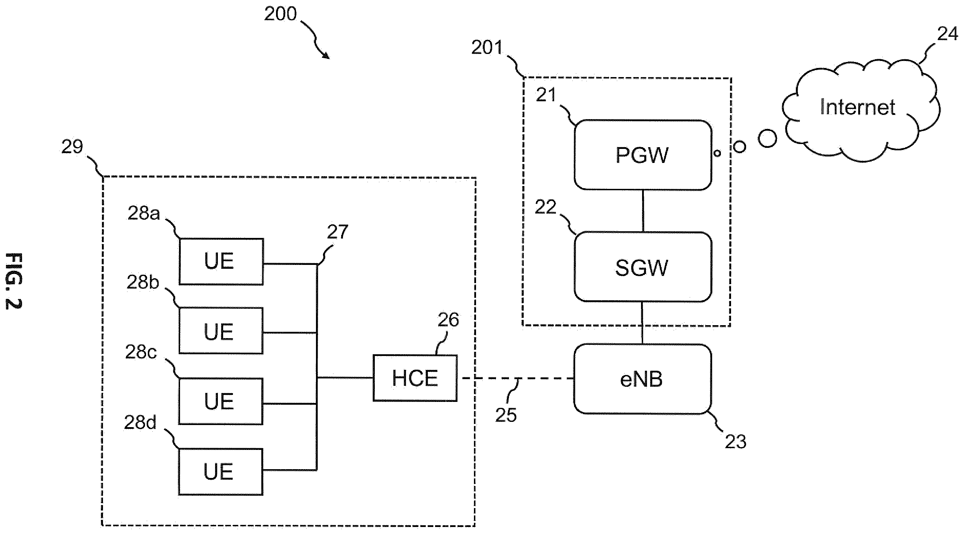

Referring now to Figure 2, there is shown therein a simplified schematic diagram of a LTE network 200 architecture, with a focus on network entities involved by the implementation of the method according to embodiments.

The PGW 21 acts as a gateway to the Internet 24, and is in charge of delivering packets from the Internet to cellular equipment's and from cellular equipment's to the Internet. In particular, a hosting cellular equipment (HCE) 26 is linked to the PGW 21 through an eNB 23 and a SGW 22. In the present example of implementation of the method, the connection 25 of the HCE 26 up to the core network 201 of the LTE network 200 is a LTE cellular connection.

The HCE 26 is connected to other equipment's 28a, 28b, 28c and 28d and, altogether they form a distinct network referred to as a subnet 29 in the context of the present disclosure. In embodiments, subnet 29 is an IP subnet. Subnet 29 can be managed solely by the HCE 26, for instance based on a client-server protocol.

Connection link 27 between the HCE 26 and the connected equipment's 28 can be of different types. For instance, it can comprise 5G connections, or form a Local Area Network (LAN, or any of its variations such as WLAN, WVLAN, etc,) connection to a subnet where regular IP hosts are located.

It should be appreciated by the one with ordinary skills in the art that whereas Figure 2 shows an embodiment with only one subnet, embodiments of the method can be applied to a configuration in which a plurality of subnets are hosted by the HCE 26.

The HCE 26 and the connected equipment's 28 belonging to the subnet 29 can have various addressing schemes, or be any combination of addressing schemes. Indeed, the addressing can be of the IPv4 type (with for instance any subnet having an IPv4 address and an IPv4 mask) or of the IPv6 type, or it can be a combination of both (with, for instance, an IPv6 addressing for subnet 29 and an IPv4 addressing for the HCE 26).

Finally, it will be noted that embodiments can advantageously be implemented in applications having standard cellular network (eNB) and Commercial Off-The-Shelf cellular equipment's.

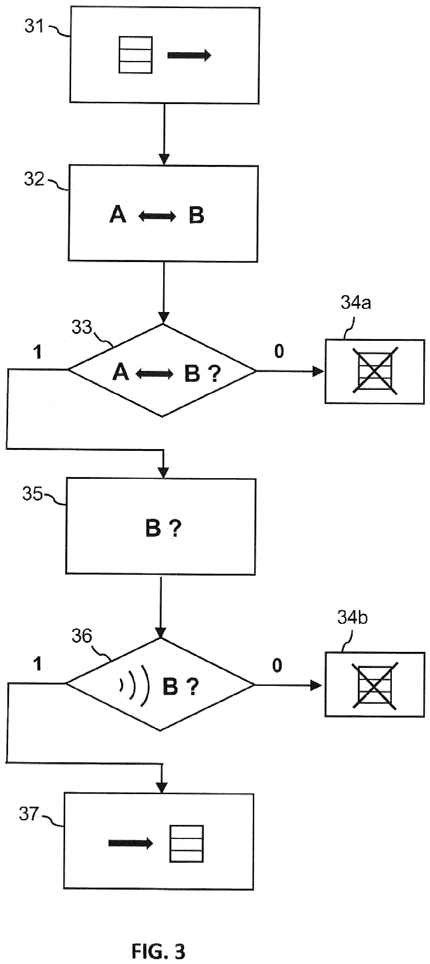

Referring now to Figure 3, there is shown therein a block diagram illustrating steps of embodiments of the method.

Block 31 corresponds to the receiving by the PGW 21 of a downlink packet. This downlink packet has a specific destination address, and comes from the switched packet network 24.

Another step of the method consists in defining subnet relationships 32 between one or more subnets and a HCE. These subnet relationships can be logical relationship associating the addresses of the HCE and the subnet being part of the relationship. The PGW is extended with the definitions of these relationships. This can be achieved by loading the subnet relationships in the PGW configuration system.

It will be further appreciated that the block diagram of Figure 3 illustrates embodiments of the method only, and that the relationships established in the PGW can be defined, modified or deleted at any time during the running of the steps of the method. For instance, a relevant relationship can be defined before or after the PGW receives a downlink packet.

In addition, such subnet relationships can be checked for validity. In one example, a given subnet relationship is held valid if and only if the corresponding subnet does not conflict with cellular equipment IP addresses allocated by the PGW and/or, further, the cellular equipment IP address matches IP addresses allocated by the PGW for cellular equipment's. Furthermore, the PGW can check that there is no conflict between relationships loaded in the configuration system. In particular, this implies checking that a specific subnet is associated to a single hosting cellular equipment.

After the receiving 31 of a packet, which is not intended for a connected cellular equipment, the PGW check its destination address and verify whether or not this address is part of a subnet relationship. If not, the packet can be dropped 34a and, if so, the next step 35 consists in locating in the network the cellular equipment (the hosting cellular equipment) which is part of this relationship.

It is then controlled whether the associated cellular equipment that has been located is connected or not 36. If not connected the packet can be dropped 34b whereas if the equipment is connected it is possible to proceed to the final step.

The final step of the method consists in forwarding the packet 37 over a bearer. Said bearer allows data of the packet to travel across the SGW to the destination of the packet. Advantageously the bearer can be either the default bearer or a dedicated bearer whose characteristics can, for instance, fit more specifically a desired quality of service for a specific service.

The method of the invention exhibits numerous advantages such as the fact that the PGW can mix downlink packets destinated to the hosting cellular equipment and to an associated subnet on the same bearer. In addition, it offers the possibility of forwarding packets to multiple subnets behind the same cellular equipment and in doing so to adapt to specific needs by choosing default or dedicated bearers. The method is transparent and proposes an efficient forwarding to subnets through a LTE connection.

## Claims

1. A method of forwarding packets from an LTE network (200) to at least one subnet (29), said LTE network (200) comprising a core network (201) with a Packet Gateway (21), PGW, and a plurality of LTE cellular equipment connected to said core network, said at least one subnet comprising a given LTE cellular equipment of said plurality of LTE cellular equipment (26) and at least one other associated cellular equipment, said at least one subnet being managed by said given LTE cellular equipment acting as a hosting cellular equipment, the method comprising the steps of:
- defining, in the PGW, subnet relationships (32) between a subnet and a cellular equipment address of the hosting cellular equipment, and upon receipt (31) at the PGW of a downlink packet with a destination address:
- checking the validity of the subnet relationships by determining which subnets are associated to which cellular equipment address by a subnet relationship, checking that a subnet does not conflict with a cellular equipment address, checking that the cellular equipment address matches an address allocated by the PGW and by checking that subnet relationships do not conflict with each other; and
- checking whether the destination address is part of a subnet relationship (33) and, if so, locate the associated cellular equipment (35) which is part of this subnet relationship; and, checking whether the located cellular equipment is connected (36) to the core network or not and, if yes, forwarding the downlink packet (37) only in case of validity over a bearer to the hosting cellular equipment and the subnet which are part of said subnet relationship.

2. The method of claim 1 wherein the core network of the LTE network is an evolved Packet Core, ePC, and comprises the PGW, a Serving Gateway, SGW, and a Mobility Management Entity, MME, and the LTE network further comprises an access network comprising Evolved Nodes B, eNodeB, and the LTE cellular equipment.

3. The method of the claims 1 and 2 wherein the LTE cellular equipment is Commercial Off-The-Shelf, COTS, equipment.

4. The method of the claims 1 to 3 wherein the at least one subnet is a 5G subnet or a Local Area Network, LAN, subnet.

5. The method of the claims 1 to 4 wherein the hosting cellular equipment manages a plurality of subnets being 5G subnets, LAN subnets or a mixed combination of 5G and LAN subnets.

6. The method of the claims 1 to 5 wherein subnet relationships are logical relationships associating the addresses of the hosting cellular equipment and the other connected equipment of the subnet.

7. The method of the claims 1 to 6 wherein subnet relationships are defined, modified or deleted before or after the receipt of a downlink packet by the PGW.

8. The method of the claims 1 to 7 wherein the subnet relationships are defined by loading said subnet relationships in a PGW configuration system of the PGW.

9. The method of the claims 1 to 8, wherein the destination and the cellular equipment addresses are Internet Protocol, IP, addresses.

10. The method of claim 9, wherein the IP addresses of the cellular equipment are IPv4 addresses or IPv6 addresses or a mixed combination of IPv4 and IPv6 addresses.

11. The method of the claims 1 to 10, wherein the bearer is a default bearer or a dedicated bearer.

12. A computer program comprising instructions which, when the program is executed by a computer, cause the computer to perform all the steps of the method of any one of Claims 1 to 11.

## Patentansprüche

1. Verfahren zum Weiterleiten von Paketen von einem LTE-Netz (200) an wenigstens ein Teilnetz (29), wobei das genannte LTE-Netz (200) ein Kernnetz (201) mit einem Packet Gateway (21) PGW umfasst, und eine Vielzahl von zellulärer LTE-Ausrüstungen, die an das genannte Kernnetz angeschlossen sind, wobei wenigstens ein Teilnetz eine bestimmte zelluläre LTE-Ausrüstung der genannten Vielzahl von zellulärer LTE-Ausrüstungen (26) und wenigstens eine andere, zugeordnete zelluläre Ausrüstung umfasst, wobei das genannte wenigstens eine Teilnetz durch die genannte bestimmte zelluläre LTE-Ausrüstung verwaltet wird, die als eine zelluläre Hosting-Ausrüstung fungiert, wobei das Verfahren die Schritte umfasst:
- in dem PGW Definieren von Teilnetz-Beziehungen (32) zwischen einem Teilnetz und einer zellulären Ausrüstungsadresse der zellulären Hosting-Ausrüstung und beim Empfang (31) eines Downlink-Pakets am PGW mit einer Zieladresse:
- Prüfen der Gültigkeit der Teilnetz-Beziehungen durch Bestimmen, welche Teilnetze welcher zellulären Ausrüstungsadresse durch eine Teilnetz-Beziehung zugeordnet sind, Prüfen, dass ein Teilnetz nicht mit einer zellulären Ausrüstungsadresse kollidiert, Prüfen, dass die zelluläre Ausrüstungsadresse zu einer Adresse passt, die durch das PGW zugeordnet ist, und durch Prüfen, dass die Teilnetz-Beziehungen nicht miteinander kollidieren; und
- Prüfen, ob die Zieladresse Teil einer Teilnetz-Beziehung (33) ist und falls ja, Lokalisieren der zugeordneten zellulären Ausrüstung (35), die Teil dieser Teilnetzbeziehung ist; und Prüfen, ob die lokalisierte zelluläre Ausrüstung an das Kernnetz angeschlossen (36) ist oder nicht und falls ja, Weiterleiten des Downlink-Pakets (37) nur in dem Fall der Gültigkeit über eine Verbindung vom bearer-Typ der zellulären Hosting-Ausrüstung und des Teilnetzes, die Teil der genannten Teilnetz-Beziehung sind.

2. Verfahren gemäß Anspruch 1, wobei das Kernnetz des LTE-Netzes ein evolved Packet Core ePC ist und das PGW, ein Serving Gateway SGW und eine Mobility Management Entity MME umfasst und das LTE-Netz weiterhin ein Zugangsnetz umfasst, umfassend Evolved Nodes B eNodeB und die zelluläre LTE-Ausrüstung.

3. Verfahren gemäß Anspruch 1 und 2, wobei die zelluläre LTE-Ausrüstung eine Commercial Off-The-Shelf-Ausrüstung (COTS-Ausrüstung) ist.

4. Verfahren gemäß Anspruch 1 bis 3, wobei das wenigstens ein Teilnetz ein 5G-Teilnetz oder ein Local Area Network-Teilnetz (LAN-Teilnetz) ist.

5. Verfahren gemäß Anspruch 1 bis 4, wobei die zelluläre Hosting-Ausrüstung eine Vielzahl von Teilnetzen verwaltet, die 5G-Teilnetze, LAN-Teilnetze oder eine gemischte Kombination von 5G- und LAN-Teilnetzen sind.

6. Verfahren gemäß Anspruch 1 bis 5, wobei Teilnetz-Beziehungen logische Beziehungen sind, die die Adressen der zellulären Hosting-Ausrüstung und die anderen angeschlossenen Ausrüstungen des Teilnetzes zuordnen.

7. Verfahren gemäß Anspruch 1 bis 6, wobei Teilnetz-Beziehungen vor oder nach dem Empfang eines Downlink-Pakets von dem PGW definiert, modifiziert oder gelöscht werden.

8. Verfahren gemäß Anspruch 1 bis 7, wobei die Teilnetz-Beziehungen durch Laden der genannten Teilnetz-Beziehungen in ein PGW-Konfigurationssystem des PGWs definiert werden.

9. Verfahren gemäß Anspruch 1 bis 8, wobei das Ziel und die zellulären Ausrüstungsadressen Internetprotokoll-Adressen (IP-Adressen) sind.

10. Verfahren gemäß Anspruch 9, wobei die IP-Adressen der zellulären Ausrüstung IPv4-Adressen oder IPv6-Adressen oder eine gemischte Kombination von IPv4- und IPv6-Adressen sind.

11. Verfahren gemäß Anspruch 1 bis 10, wobei der Verbindung vom voreingestellter bearer-Typ oder vom dedizierter bearer-Typ ist.

12. Computerprogramm, umfassend Anweisungen, die, wenn das Programm von einem Computer ausgeführt ist, den Computer veranlassen, alle die Schritte des Verfahrens gemäß irgendeinem der Ansprüche 1 bis 11 auszuführen.

## Revendications

1. Procédé de transmission de paquets d'un réseau LTE (200) à au moins un sous-réseau (29), ledit réseau LTE (200) comprenant un réseau coeur (201) avec une passerelle de paquets (21), PGW, et une pluralité d'équipements cellulaires LTE connectés audit réseau coeur, ledit au moins un sous-réseau comprenant un équipement cellulaire LTE donné de ladite pluralité d'équipements cellulaires LTE (26) et au moins un autre équipement cellulaire associé, ledit au moins un sous-réseau étant géré par ledit équipement cellulaire LTE donné agissant en tant qu'équipement cellulaire d'hébergement, le procédé comprenant les étapes consistant à :
- définir, dans la PGW, des relations de sous-réseaux (32) entre un sous-réseau et une adresse d'équipement cellulaire de l'équipement cellulaire d'hébergement, et à réception (31) au niveau de la PGW d'un paquet de liaison descendante avec une adresse de destination :
- vérifier la validité des relations de sous-réseaux en déterminant quels sous-réseaux sont associés à quelle adresse d'équipement cellulaire par une relation de sous-réseaux, vérifier qu'un sous-réseau n'est pas en conflit avec une adresse d'équipement cellulaire, vérifier que l'adresse d'équipement cellulaire correspond à une adresse allouée par la PGW et vérifier que les relations de sous-réseaux ne sont pas en conflit entre elles ; et
- vérifier si l'adresse de destination fait partie d'une relation de sous-réseaux (33) et, le cas échéant, localiser l'équipement cellulaire (35) associé qui fait partie de cette relation de sous-réseaux ; et, vérifier si l'équipement cellulaire localisé est connecté (36) au réseau coeur ou non et, si oui, transmettre le paquet de liaison descendante (37) uniquement en cas de validité par le biais d'une connexion de type bearer à l'équipement cellulaire d'hébergement et au sous-réseau qui font partie de ladite relation de sous-réseaux.

2. Procédé selon la revendication 1 dans lequel le réseau coeur du réseau LTE est un cœur paquet évolué, ePC, et comprend la PGW, une passerelle de desserte, SGW, et une entité de gestion de mobilité, MME, et le réseau LTE comprend en outre un réseau d'accès comprenant des nœuds B évolués, eNodeB, et l'équipement cellulaire LTE.

3. Procédé selon les revendications 1 et 2 dans lequel l'équipement cellulaire LTE est un équipement commercial de série, COTS (Commercial Off-The-Shelf).

4. Procédé selon les revendications 1 à 3 dans lequel le au moins un sous-réseau est un sous-réseau 5G ou un sous-réseau de réseau local, LAN.

5. Procédé selon les revendications 1 à 4 dans lequel l'équipement cellulaire d'hébergement gère une pluralité de sous-réseaux qui sont des sous-réseaux 5G, des sous-réseaux LAN ou une combinaison mélangée de sous-réseaux 5G et LAN.

6. Procédé selon les revendications 1 à 5 dans lequel des relations de sous-réseaux sont des relations logiques associant les adresses de l'équipement cellulaire d'hébergement et l'autre équipement connecté du sous-réseau.

7. Procédé selon les revendications 1 à 6 dans lequel des relations de sous-réseaux sont définies, modifiées ou supprimées avant ou après la réception d'un paquet de liaison descendante par la PGW.

8. Procédé selon les revendications 1 à 7 dans lequel les relations de sous-réseaux sont définies en chargeant lesdites relations de sous-réseaux dans un système de configuration de PGW de la PGW.

9. Procédé selon les revendications 1 à 8, dans lequel les adresses de la destination et de l'équipement cellulaire sont des adresses de protocole Internet, IP.

10. Procédé selon la revendication 9, dans lequel les adresses IP de l'équipement cellulaire sont des adresses IPv4 ou des adresses IPv6 ou une combinaison mélangée d'adresses IPv4 et IPv6.

11. Procédé selon les revendications 1 à 10, dans lequel la connexion de type bearer est une connexion de type bearer par défaut ou une connexion de type bearer dédié.

12. Programme informatique comprenant des instructions qui, lorsque le programme est exécuté par un ordinateur, amènent l'ordinateur à réaliser toutes les étapes du procédé selon l'une quelconque des revendications 1 à 11.
